# EUROPEAN PATENT APPLICATION

(11) **EP 4 708 842 A1**
(43) Date of publication of application: **11.03.2026**
(21) Application number: 25200336.3
(22) Date of filing: 04.09.2025
(51) Int. Cl.: H04N 9/31

(54) **DISPLAY METHOD, PROGRAM, AND INFORMATION PROCESSING APPARATUS**

(30) Priority: 06.09.2024 JP 2024153930
(71) Applicant: Seiko Epson Corporation, Tokyo 160-8801 (JP)
(72) Inventor: SHINOHARA, Shinpei, Suwa-shi, 392-8502 (JP); TAKEUCHI, Kota, Suwa-shi, 392-8502 (JP)
(74) Representative: Lewis Silkin LLP

(57) **Abstract**

A projection apparatus includes a projector configured to project an image onto a projection surface and a camera configured to capture the image of the projection surface. An information processing apparatus, configured to communicate with the projection apparatus, displays a first superimposition image with a first indication image superimposed on a first image. The first image is based on a capture image acquired by the camera imaging the projection surface with a first pattern projected. The first indication image indicates a feature portion corresponding to an edge detected from the captured image. The apparatus also displays a second superimposition image with a second indication image superimposed on a second image. The second image is based on a capture image acquired by the camera imaging the projection surface with a second pattern projected. The second indication image indicates a feature portion corresponding to an edge detected from the second captured image.

## Description

The present application is based on, and claims priority from JP Application Serial Number 2024-153930, filed September 6, 2024, the disclosure of which is hereby incorporated by reference herein in its entirety.

### BACKGROUND

### 1. Technical Field

The present disclosure relates to a display method, a program, and an information processing apparatus.

### 2. Related Art

In the technique disclosed in JP-A-2022-092169, a first captured image including a first projection image and a projection surface is acquired by an imaging device in a first period. Then, four first projection points, which are the four corners of the first projection image, and four first feature points as feature points of the projection surface are extracted from the first captured image. In a second period after the first period, a second captured image including the second projection image and the projection surface is acquired by the imaging device. Four second projection points, which are the four corners of the second projection image, and four second feature points corresponding one-to-one to the four first feature points are extracted from the second captured image.

JP-A-2022-092169 is an example of the related art.

The accuracy of extracting the four first feature points and the four second feature points varies depending on the type of the pattern projected on the projection surface. In the related art, a user cannot grasp which pattern should be used to improve the accuracy of feature point extraction.

### SUMMARY

According to a first aspect of the present disclosure, there is provided a display method including: displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image; and displaying, with the display device, a second superimposition image in which a second indication image is superimposed on a second image, the second captured image being an image based on a second capture image acquired by the camera imaging a second pattern different from the first pattern projected from the projector onto the projection surface and the projection surface, the second indication image indicating a second feature portion serving as a mark on the projection surface extracted based on the second image.

According to an aspect of the present disclosure there is provided a program causing a computer, which controls a display device, to display, with the display device, a first superimposition image in which a first indication image is superimposed on a first image, the first image being an image based on a first capture image acquired by camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.

According to an aspect of the present disclosure, there is provided an information processing apparatus including a processing device, the processing device displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.

### BRIEF DESCRIPTION OF THE DRAWINGS

FIG. 1 is a diagram illustrating a configuration example of a system including an information processing apparatus according to an embodiment of the present disclosure.
FIG. 2 is a diagram illustrating an installation example of a projection surface in the embodiment.
FIG. 3 is a diagram illustrating a second pattern in the present embodiment.
FIG. 4 is a diagram illustrating an example of a gradient of brightness in a second portion of the second pattern.
FIG. 5 is a diagram illustrating the influence of reflected light from another surface near the projection surface.
FIG. 6 is a diagram illustrating a display example of a first captured image, a second captured image, and a third captured image.
FIG. 7 is a diagram illustrating a display example of a superimposition image.
FIG. 8 is a diagram illustrating a display example of a notification image for notifying failure in detection of a feature point.
FIG. 9 is a flowchart illustrating a flow of processing in a reference data setting method executed by a processing device according to a program.
FIG. 10 is a diagram illustrating a second pattern in a modification (1).
FIG. 11 is a diagram illustrating an example of a gradient of brightness in a second portion of the second pattern in the modification (1).
FIG. 12 is a diagram illustrating an example of a gradient of brightness in the second portion of the second pattern in a modification (2).
FIG. 13 is a diagram illustrating an example of a second pattern in a modification (3).
FIG. 14 is a diagram illustrating an example of an enlarged image in a modification (6).

### DESCRIPTION OF EMBODIMENTS

Various technically preferable limitations are added to embodiments explained below. However, embodiments of the present disclosure are not limited to the embodiments explained below.

### A. Embodiment

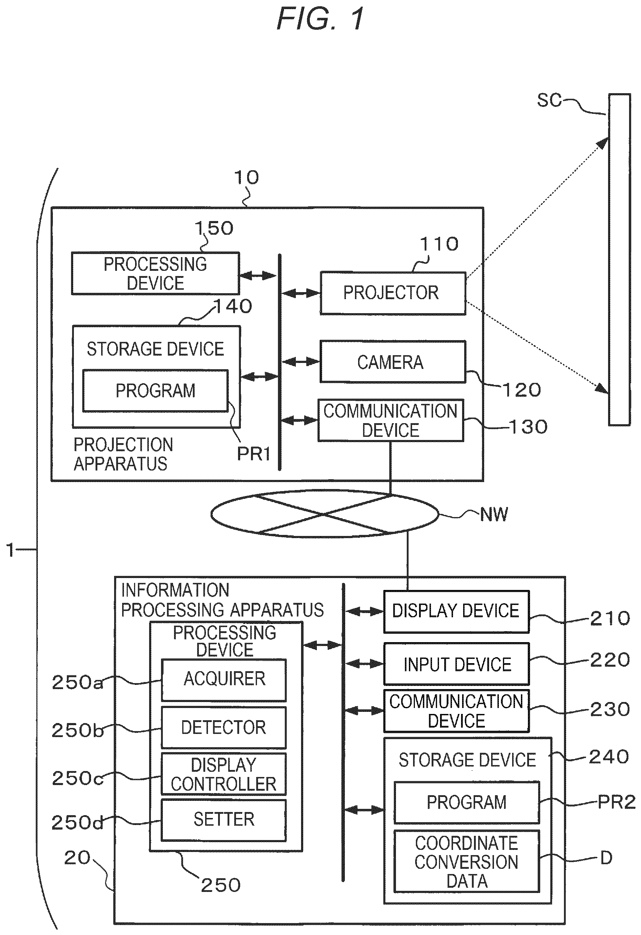

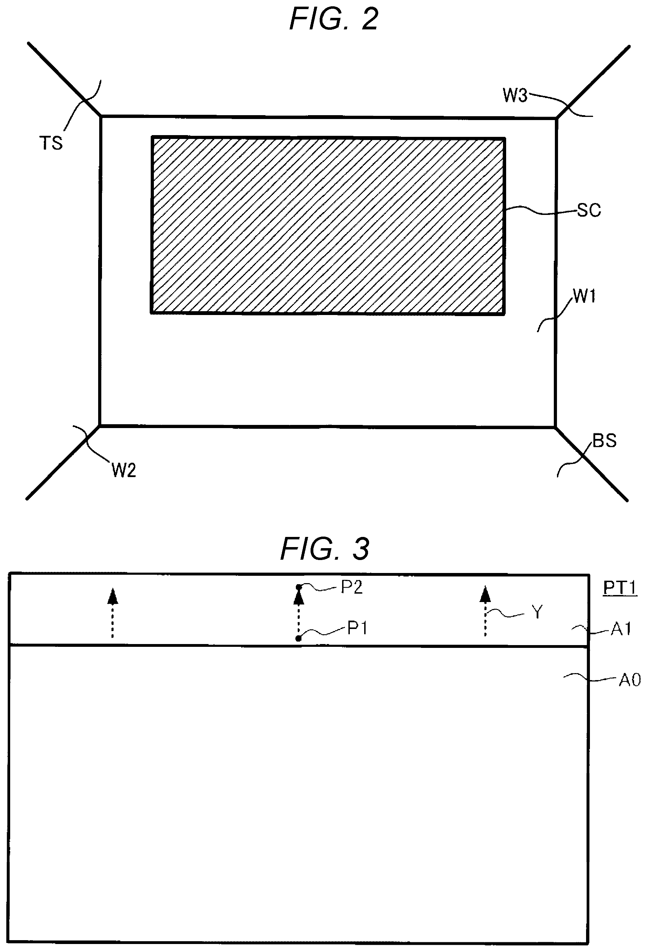

FIG. 1 is a diagram illustrating a configuration example of a system 1 including an information processing apparatus 20 and a projection apparatus 10 according to an embodiment of the present disclosure. The projection apparatus 10 is an apparatus that projects an image onto a projection surface SC. The projection apparatus 10 communicates with the information processing apparatus 20 via a communication network NW. The communication network NW in the present embodiment is a wireless communication network but may be a wired communication network. As illustrated in FIG. 2, the projection surface SC is installed on a wall W1 of a room in which the projection apparatus 10 is disposed. As illustrated in FIG. 2, a ceiling TS, a floor surface BS, a wall W2, and a wall W3 that partition the room are connected to the wall W1, and the projection surface SC is installed near the ceiling TS. As illustrated in FIG. 1, the projection apparatus 10 includes a projector 110, a camera 120, a communication device 130, a storage device 140, and a processing device 150. Each of the projector 110, the camera 120, the communication device 130, and the storage device 140 is connected to the processing device 150 via a bus (not illustrated in FIG. 1).

The processing device 150 includes one or a plurality of processors. The processor includes, for example, a central processing unit (CPU). The processing device 150 is an example of a computer in the present disclosure. As explained in detail below, the processing device 150 operates according to a program PR1 stored in advance in the storage device 140 to thereby function as a control center of the projection apparatus 10.

The projector 110 includes a light source (an internal light source), a generator that generates image light corresponding to image data given from the processing device 150, and an optical system that guides the image light generated by the generator to the projection surface SC. In FIG. 1, the generator and the optical system are not illustrated. Specific examples of the generator include a display panel including a light modulation element such as a liquid crystal display (LCD), a liquid crystal on silicon (LCOS), or a digital micromirror device (DMD).

The camera 120 includes a CMOS or CCD image sensor. In the present embodiment, an imaging region of the camera 120 is set in advance to cover an entire projection region where an image is projected by the projector 110. The camera 120 images the imaging region under the control of the processing device 150. The camera 120 outputs image data representing a captured image to the processing device 150.

The communication device 130 is wirelessly connected to the communication network NW. The communication device 130 includes an antenna and a wireless communication circuit for wirelessly communicating with the information processing apparatus 20 via the communication network NW under the control of the processing device 150. The communication device 130 passes data received from the information processing apparatus 20 to the processing device 150 and transmits data given from the processing device 150 to the information processing apparatus 20.

The storage device 140 includes a nonvolatile memory such as a flash read-only memory (ROM) and a volatile memory such as a random-access memory (RAM). The nonvolatile memory of the storage device 140 stores the program PR1 for causing the processing device 150 to function as a control center of the projection apparatus 10. The nonvolatile memory of the storage device 140 is used by the processing device 150 as a work area when executing the program PR1. When a power supply (not illustrated in FIG. 1) of the projection apparatus 10 is turned on, the processing device 150 reads out the program PR1 from the nonvolatile memory to the volatile memory and starts executing the program PR1 read out to the volatile memory.

The processing device 150 operating according to the program PR1 performs projection of an image by the projector 110 and imaging by the camera 120 according to instruction data received using the communication device 130. The processing device 150 operating according to the program PR1 transmits image data representing an image captured using the camera 120 to the information processing apparatus 20 using the communication device 130.

The information processing apparatus 20 is a device that controls projection of an image by the projector 110 and capturing of an image by the camera 120 according to operation of a user. The information processing apparatus 20 in the present embodiment is a smartphone but may be a tablet terminal. As illustrated in FIG. 1, the information processing apparatus 20 includes a display device 210, an input device 220, a communication device 230, a storage device 240, and a processing device 250. Each of the display device 210, the input device 220, the communication device 230, and the storage device 240 is connected to the processing device 250 via a bus (not illustrated in FIG. 1).

Like the processing device 150, the processing device 250 includes one or a plurality of processors. As explained in detail below, the processing device 250 operates according to a program PR2 stored in advance in the storage device 240 to thereby function as a control center of the information processing apparatus 20.

The display device 210 is, for example, a liquid crystal display. The display device 210 displays an image under the control by the processing device 250. The input device 220 is, for example, a touch sensor provided to cover a display region in the display device 210. When a user performs a touch operation on the input device 220, the input device 220 outputs data indicating a position touched by the user to the processing device 250. Like the projector 110, the display device 210 may be a projection-type display device. The projector 110 may also function as the display device 210. The display device 210 may be called a displayer.

The communication device 230 is wirelessly connected to the communication network NW. Like the communication device 130, the communication device 230 includes an antenna and a wireless communication circuit. Under the control by the processing device 250, the communication device 230 passes data received from the projection apparatus 10 to the processing device 250 and transmits data provided from the processing device 250 to the projection apparatus 10.

Like the storage device 140, the storage device 240 includes a nonvolatile memory and a volatile memory. In the nonvolatile memory of the storage device 240, the program PR2 for causing the processing device 250 to function as a control center of the information processing apparatus 20 and coordinate conversion data D are stored in advance. The coordinate conversion data D is data representing, for each of a plurality of adjustment points for adjusting the shape of an image projected from the projector 110, a conversion matrix for mutually converting a first coordinate in a first coordinate system defining the position of the projector 110 on the display panel and a second coordinate in a second coordinate system defining the position on a captured image by the camera 120. The coordinate conversion data D is generated as appropriate by well-known calibration using captured image data representing a captured image of the projection surface SC onto which structured light such as a sinusoidal wave pattern is projected from the projector 110 and image data representing the pattern. The coordinate conversion data D is an example of a correspondence relationship in the present disclosure. The coordinate conversion data D may be stored in the storage device 140. In this case, the coordinate conversion data D may be transmitted from the storage device 140 to the storage device 240 by the functions of the communication devices 130 and 230.

The nonvolatile memory of the storage device 240 is used by the processing device 250 as a work area when executing the program PR2. When operation of instructing the input device 220 to execute the program PR2, for example, operation of pressing an icon corresponding to the program PR2 is performed, the processing device 250 reads out the program PR2 from the nonvolatile memory to the volatile memory and starts executing the program PR2 read out to the volatile memory. The processing device 250 operating according to the program PR2 functions as an acquirer 250a, a detector 250b, a display controller 250c, and a setter 250d.

The acquirer 250a acquires first captured image data representing a first captured image G1 acquired by imaging, with the camera 120, a first pattern projected onto the projection surface SC from the projector 110 of the projection apparatus 10 and the projection surface SC. The first captured image G1 is an example of a first image in the present disclosure. The first pattern in the present embodiment is an entirely white image having uniform and constant brightness over an entire image. The acquirer 250a causes the projection apparatus 10 to project the first pattern by transmitting, to the projection apparatus 10, using the communication device 230, instruction data for instructing projection of white light having uniform and constant brightness. Then, the acquirer 250a transmits instruction data for instructing imaging by the camera 120 and transmission of a captured image to the projection apparatus 10 in a state of projecting the first pattern onto the projection surface SC and acquires, as the first captured image data, image data returned from the projection apparatus 10.

The acquirer 250a acquires second captured image data representing a second captured image G2 acquired by imaging, with the camera 120, a second pattern different from the first pattern projected onto the projection surface SC from the projector 110 of the projection apparatus 10 and the projection surface SC. The second captured image G2 is an example of a second image in the present disclosure. FIG. 3 is a diagram illustrating a second pattern PT1 in the present embodiment. As illustrated in FIG. 3, the second pattern PT1 in the present embodiment is an image including a first portion A0 and a strip-shaped second portion A1 provided above the first portion A0. The first portion A0 in the second pattern PT1 is entirely white and the brightness in the first portion A0 is uniform and constant.

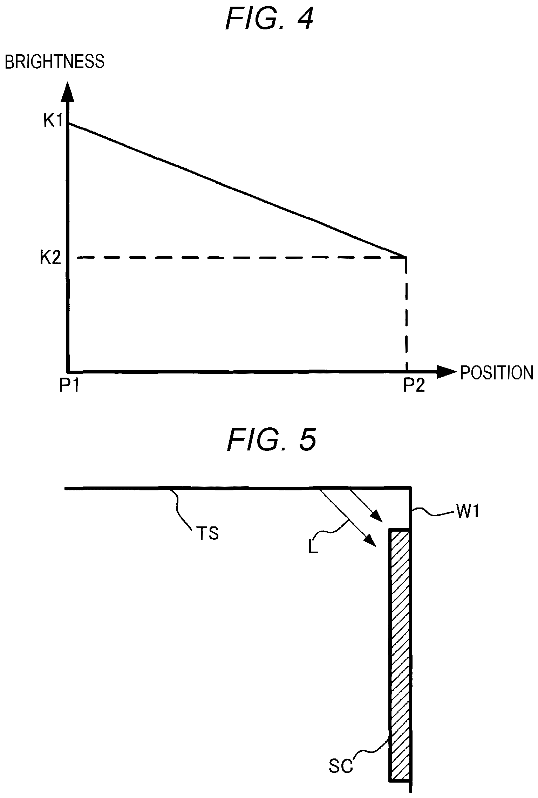

In the second portion A1, the brightness continuously decreases in a first direction, which is an example of a direction from the center of the projection surface SC toward the outer side. In other words, the second portion A1 seen blurred. In FIG. 3, the first direction is indicated by an arrow Y1 indicating an example of the first direction. In the present embodiment, in the second portion A1, the brightness decreases from K1 to K2 in the first direction and, in FIG. 3, a state of the decrease is illustrated by drawing the arrow Y1 with a dotted line. FIG. 4 is a graph illustrating a gradient of decrease in brightness from a position P1 to a position P2 in FIG. 3. In the present embodiment, a ratio of the number of pixels of the second portion A1 to the number of pixels of the entire second pattern PT1 in the first direction is approximately 5 to 10%. In detection of corners of the projection surface SC based on the first captured image G1, when the corners of the projection surface SC and another surface such as the ceiling TS are close, as illustrated in FIG. 5, the detection accuracy of corners close to the other surface sometimes decreases because of the influence of reflected light L of projection light by the other surface. The second pattern PT1 is used to, even when the corners of the projection surface SC and another surface such as a ceiling T are close, detect the corners without being affected by the reflected light of the projection light by the other surface. In the present embodiment, as illustrated in FIG. 2, since the projection surface SC is provided on the ceiling TS side of the wall W1, there is a concern about the influence of reflected light from the ceiling TS when the corners are detected. For this reason, in the present embodiment, the second portion A1 is provided above the first portion A0, that is, on the ceiling TS side. When there is a concern about the influence of reflected light from surfaces (the wall W2, the wall W3, and the floor surface BS) other than the ceiling TS, an image in which the annular second portion A1 is provided around the first portion A0 only has to be used as the second pattern PT1.

The acquirer 250a acquires third captured image data representing a third captured image G3 acquired by imaging the projection surface SC irradiated with external light from a light source (external light source) different from the projector 110. Examples of the external light from the light source different from the projector 110 include ambient light in a room in which the projection apparatus 10 is installed. The acquirer 250a transmits instruction data for instructing stop of projection of image light to the projection apparatus 10 using the communication device 230 and stops the projection of the image light by the projection apparatus 10. Then, the acquirer 250a transmits, to the projection apparatus 10 in a state of stopping the projection of the image light, in other words, the projection apparatus 10 in a state of projecting an entirely black image onto the projection surface SC, instruction data for instructing imaging by the camera 120 and transmission of a captured image and acquires, as third captured image data, image data returned from the projection apparatus 10. As another example of constructing an environment in which the projection surface SC irradiated with the external light from the external light source is imaged, an aspect in which the output of the light source of the projector 110 is reduced to zero or near zero or an aspect in which a mechanical shutter provided in the projector 110 is closed may be adopted.

The detector 250b detects, based on the first captured image data, a plurality of first feature points indicating corners of the projection surface SC (edges forming a contour of the projection surface SC) in the first captured image G1. The corner of the projection surface SC in the first captured image G1 is an example of a first corner in the present disclosure. Specifically, the detector 250b detects the plurality of first feature points indicating the corners of the projection surface SC by applying an algorithm for detecting feature points to the first captured image G1. The feature point is an example of a feature portion. The feature portion may be a point or may be a line. The detector 250b may detect a plurality of first feature points by applying an algorithm for detecting an edge to the first captured image G1. The detector 250b is not limited to detecting the plurality of first feature points, that is, a plurality of feature portions and may detect only one feature portion. For example, the detector 250b may detect only one line or only one point, which is a feature portion corresponding to an edge, by applying an algorithm for detecting the edge to the first captured image G1. As explained above, the first captured image G1 is obtained by imaging the projection surface SC in a state in which an entirely white image is projected by the camera 120. The detection of a corner of the projection surface SC based on the first captured image G1 has an advantage that the corner can be detected in most environments if the corner of the projection surface SC and surroundings have a sufficiently large contrast ratio. On the other hand, the detection of an edge of the projection surface SC based on the first captured image G1 has a disadvantage that the corner sometimes cannot be detected when the vicinity of the corner of the projection surface SC is seen in the same color when the entirely white image is projected (when the contrast between the corner and the surroundings is low). The detector 250b may detect a plurality of first feature points indicating corners of the projection surface SC in the first captured image G1 based on the first captured image data and the third captured image data. For example, for each pixel included in an image represented by the first captured image data, the detector 250b subtracts a pixel value of a pixel corresponding to the pixel in an image represented by the third captured image data to calculate a difference image representing the difference between both the images.

Further, the detector 250b detects a plurality of second feature points indicating corners of the projection surface SC in the second captured image G2 based on the second captured image data and the third captured image data. The corners of the projection surface SC in the second captured image G2 corresponds to the corners of the projection surface SC in the first captured image. For example, when a corner of the projection surface SC in the first captured image G1 is an upper left corner, the corner of the projection surface SC in the second captured image G2 is an upper left corner equivalent to the upper left corner of the projection surface SC in the first captured image G1 or the vicinity of the upper left corner. The corner of the projection surface SC in the second captured image G2 is an example of a second corner in the present disclosure. In the present embodiment, for each pixel included in the image represented by the second captured image data, the detector 250b subtracts a pixel value of a pixel corresponding to the pixel in the image represented by the third captured image data to calculate a difference image representing the difference between both the images. By this processing, noise around the corner of the projection surface SC in the second captured image G2 is removed and only influence due to the projection of the second pattern appears in the difference image.

Subsequently, the detector 250b extracts a dark portion with respect to the difference image to thereby obtain information on the corner of the projection surface SC. Examples of processing of extracting a dark portion include local minimum value detection processing. The detector 250b in the present embodiment causes a differential filter of first derivative and a differential filter of second derivative to act on the difference image and detects a set of pixels in which "a result of the first derivative is equal to or smaller than a certain threshold" and "a result of the second derivative is equal to or larger than the certain threshold" as pixels corresponding to an edge of the projection surface SC. The detection of a corner of the projection surface SC based on the second captured image G2 has an advantage that the corner can be detected even when the contrast between the corner of the projection surface SC and the surroundings is low. The detection of an edge of the projection surface SC based on the second captured image G2 has a disadvantage that the detection can be used when a surface (for example, a ceiling) that generates reflected light is present around the projection surface SC but cannot be used when a surface that generates reflected light is absent.

The detector 250b detects, based on the third captured image data, a plurality of third feature points indicating edges of the projection surface SC in the third captured image G3. Specifically, the detector 250b detects a plurality of third feature points indicating edges of the projection surface SC by applying well-known edge detection to the third captured image G3. The detection of a corner of the projection surface SC based on the third captured image G3 has an advantage that the corner can be detected if there is contrast between the corner of the projection surface SC and the surroundings. The third feature point can also be used as a mark outside the screen surface. The mark is a reference at the time when the position and the shape of an image projected from the projector 110 are corrected and is a portion of the projection surface SC that defines features of the projection surface SC such as the corner of the projection surface SC explained above and a side of the projection surface SC. Therefore, the position and the shape of the image projected from the projector 110 are changed according to the mark. The detection of an edge of the projection surface SC based on the third captured image G3 has a disadvantage that it is likely that a corner is erroneously detected because of the influence of noise reflected in a captured image of the camera 120 or a mark unrelated to a corner of the projection surface SC (for example, a pattern of a wall surface on which the projection surface SC is installed) and a disadvantage in that it cannot be used in a dark room in which there is no ambient light. However, even when the projection surface SC is installed in a dark room, it is likely that the detection of an edge of the projection surface SC based on the third captured image G3 can be performed by projecting a rectangular entirely white image on the center of the projection surface SC and adjusting exposure to a corner.

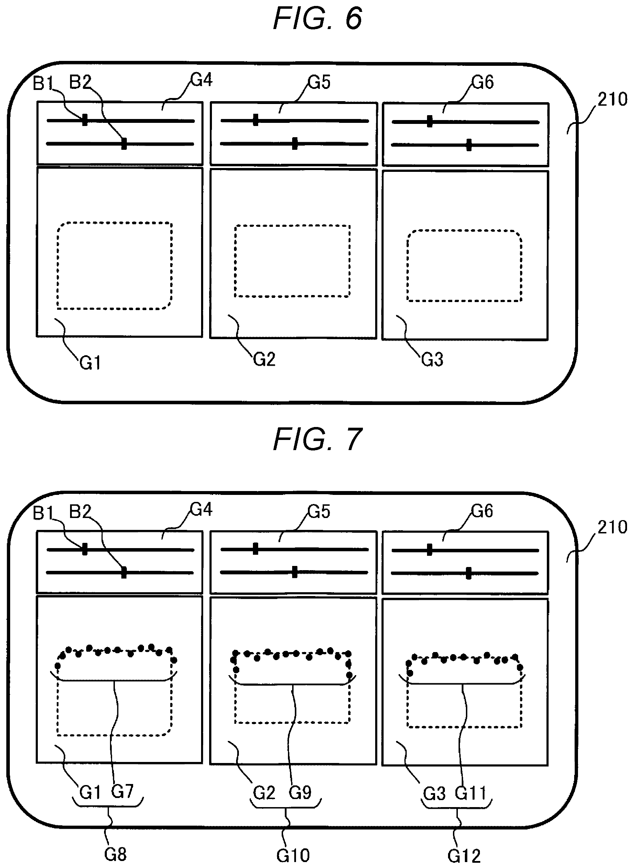

Prior to detection of feature points by the detector 250b, every time the first captured image G1, the second captured image G2, and the third captured image G3 are captured, the display controller 250c arranges each of the first captured image G1, the second captured image G2, and the third captured image G3 in imaging order thereof and displays the images on the display device 210. FIG. 6 is a diagram illustrating a display example of the first captured image G1, the second captured image G2, and the third captured image G3 in the present embodiment. As illustrated in FIG. 6, the display controller 250c displays the first captured image G1, the second captured image G2, and the third captured image G3 side by side on the display device 210. In FIG. 6, the contour of the projection surface SC reflected in each of the first captured image G1, the second captured image G2, and the third captured image G3 is drawn by a dotted line.

In the present embodiment, when displaying, on the display device 210 side by side above the first captured image G1, the first captured image G1, the display controller 250c displays a first setting image G4 for setting a first range (zoom of a camera) in which an arithmetic operation of extracting a first feature point in the first captured image G1 is performed and the exposure of the camera 120. A seek bar B1 in the first setting image G4 is a virtual operator for adjusting the zoom of the camera 120 and a seek bar B2 in the first setting image G4 is a virtual operator for adjusting the exposure of the camera 120. The user who has visually recognized the first captured image G1 and the first setting image G4 displayed on the display device 210 can adjust at least one of the zoom and the exposure of the camera 120 with operation on the first setting image G4 and instruct to capture the first captured image G1 again.

When displaying the second captured image G2, the display controller 250c displays, on the display device 210 side by side above the second captured image G2, a second setting image G5 for setting a second range in which an arithmetic operation of extracting a second feature point in the second captured image G2 is performed. The seek bar B1 and the seek bar B2 are also provided in the second setting image G5. Similarly, when displaying the third captured image G3, the display controller 250c displays, on the display device 210 side by side above the third captured image G3, a fourth setting image G6 for setting a third range in which an arithmetic operation of extracting a third feature point in the third captured image G3 is performed. The seek bar B1 and the seek bar B2 are also provided in the fourth setting image G6. Instead of displaying the second setting image G5 and the fourth setting image G6, the display controller 250c may display, on the display device 210, a third setting image for setting whether to set the second range in which the arithmetic operation of extracting the second feature point in the second captured image G2 is performed to the same range as the first range. Although not illustrated, the third setting image is, for example, an image indicating a check box or a toggle switch. That is, the third setting image is a user interface (UI) image for switching a function of setting the second range to the same range as the first range from one of enabled and disabled to the other of enabled and disabled. In this case, when receiving an instruction to set the second range to the same range as the first range from the user via the third setting image, the processing device 250 may set the second range to the same range as the first range. One of the seek bar B1 and the seek bar B2 may have a function of adjusting a threshold for detecting a plurality of first feature points. In this case, the user can adjust detection sensitivity of the plurality of first feature points and can set the detection sensitivity to detection sensitivity appropriate for the user by operating one of the seek bar B1 and the seek bar B2.

After execution of the processing by the detector 250b, as illustrated in FIG. 7, the display controller 250c displays, on the display device 210, a first indication image G7 indicating a first feature point to be superimposed on the first captured image G1 to thereby display a first superimposition image G8 obtained by superimposing the first indication image G7 on the first captured image G1 on the display device 210. As illustrated in FIG. 7, the first indication image G7 is a first position image indicating the position of each of a plurality of points belonging to a point group detected by the detector 250b as first feature points, that is, the position of a corner of the projection surface SC in the first captured image G1. That is, a plurality of first indication images G7 include a first position image indicating the position of the corner of the projection surface SC in the first captured image G1. One of the plurality of first indication images G7, for example, the first indication image G7 closest to the corner may be the first position image.

As illustrated in FIG. 7, the display controller 250c displays, on the display device 210, a second indication image G9 indicating a second feature point to be superimposed on the second captured image G2 to thereby display, on the display device 210, a second superimposition image G10 obtained by superimposing the second indication image G9 on the second captured image G2. Like the first indication image G7, the second indication image G9 is a second position image indicating the position of each of a plurality of points belonging to a point group detected by the detector 250b as second feature points, that is, the position of a corner of the projection surface SC in the second captured image G2. That is, a plurality of second indication images G9 include a second position image indicating the position of the corner of the projection surface SC in the second captured image G2. One of the plurality of second indication images G9, for example, the second indication image G9 closest to the corner may be the second position image.

As illustrated in FIG. 7, the display controller 250c displays, on the display device 210, a third indication image G11 indicating a third feature point to be superimposed on the third captured image G3 to thereby display, on the display device 210, a third superimposition image G12 obtained by superimposing the third indication image G11 on the third captured image G3. Like the first indication image G7 and the second indication image G9, the third indication image G11 is a third position image indicating the position of each of a plurality of points belonging to a point group detected by the detector 250b as third feature points, that is, the position of a corner of the projection surface SC in the third captured image G3. That is, a plurality of third indication images G11 include a third position image indicating the position of the corner of the projection surface SC in the third captured image G3. One of the plurality of third indication images G11, for example, the third indication image G11 closest to the corner may be the third position image.

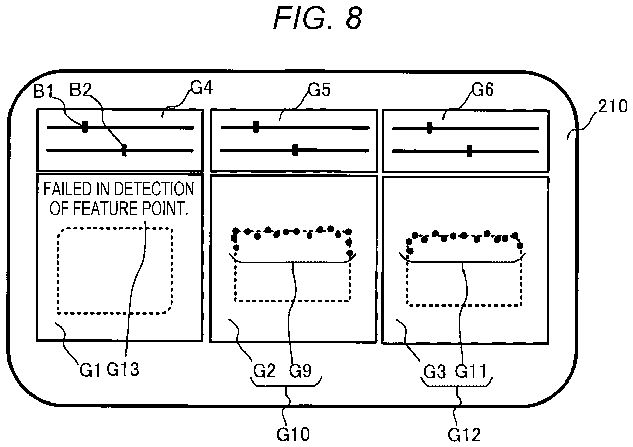

When failing in the detection of any of the first feature point, the second feature point, and the third feature point, the display controller 250c may display, on the display device 210, a notification image for notifying the failure in the detection of the feature point to the user. For example, when failing in the detection of the first feature point, as illustrated in FIG. 8, the display controller 250c displays a first notification image G13 including a message notifying the failure in the detection of the first feature point on the display device 210 to be superimposed on the first captured image G1. When failing in the detection of the first feature point, the display controller 250c may display the first setting image G4 explained above to thereby urge the user to adjust parameters of the camera 120 and, when the size of a region where white crushing or black crushing occurs in the first captured image G1 is 80% or more of the entire first captured image G1, may display, on the display device 210, an image of a message for urging the user to narrow exposure or loosen exposure.

The setter 250d receives operation of the user performed on the input device 220 in order to select any one of the first superimposition image G8, the second superimposition image G10, and the third superimposition image G12. Among the first superimposition image G8, the second superimposition image G10, and the third superimposition image G12, the user selects an image in which a corner of the projection surface SC is most appropriately detected. The setter 250d sets, based on the operation explained above, a coordinate in the first coordinate system of the corner of the projection surface SC in order to define a projection position of an image projected from the projector 110 on the projection surface SC. For example, when the operation of selecting the first superimposition image G8 is performed, the setter 250d sets a coordinate in the first coordinate system of the corner of the projection surface SC by converting a coordinate in the second coordinate system of the first feature point into a coordinate in the first coordinate system using the coordinate conversion data D. Then, the setter 250d causes the storage device 140 of the projection apparatus 10 to store data representing the coordinate in the first coordinate system of the corner of the projection surface SC as reference data for maintaining (adjusting) the position of a projection image with respect to the projection surface SC at a position before the change of the relative position even when a relative position of the projection apparatus 10 to the projection surface SC changes. The setter 250d only has to receive operation for selecting one of at least two images among the first superimposition image G8, the second superimposition image G10, and the third superimposition image G12. Therefore, for example, the setter 250d may receive operation for selecting one of the first superimposition image G8 and the second superimposition image G10.

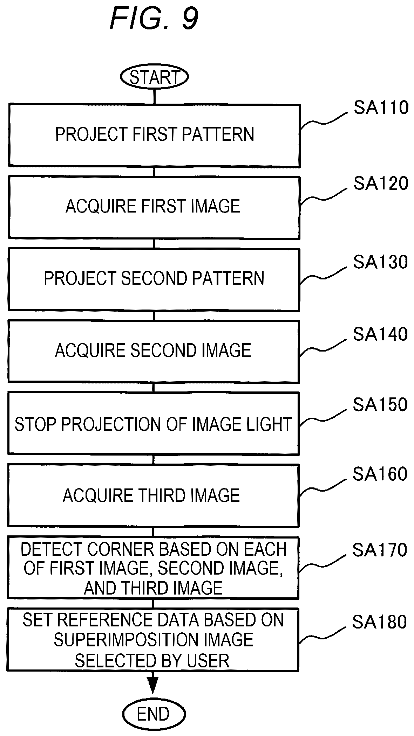

Further, the processing device 250 operating according to the program PR2 executes a reference data setting method including a display method that conspicuously shows characteristics of the present disclosure. FIG. 9 is a flowchart illustrating a flow of processing in the reference data setting method. As illustrated in FIG. 9, the reference data setting method includes respective kinds of processing in step SA110 to step SA190. The processing in step SA110 to step SA170 corresponds to a display method in the present disclosure.

In step SA110, the processing device 250 functions as the acquirer 250a. In step SA110, the processing device 250 causes the projection apparatus 10 to project the first pattern. In step SA120 following step SA110, the processing device 250 functions as the acquirer 250a and the display controller 250c. In step SA120, the processing device 250 acquires first captured image data by instructing the projection apparatus 10, which is projecting the first pattern on the projection surface SC, to capture the image of the projection surface SC with the camera 120. Then, in step SA120, the processing device 250 displays the first captured image G1 and the first setting image G4 on the display device 210. When adjustment of parameters of the camera 120 is instructed by operation on the first setting image G4, the processing device 250 executes the processing in step SA110 and step SA120 again using the adjusted parameters.

In step SA130 following step SA120, the processing device 250 functions as the acquirer 250a. In step SA130, the processing device 250 causes the projection apparatus 10 to project the second pattern. In step SA140 following step SA130, the processing device 250 functions as the acquirer 250a and the display controller 250c. In step SA140, the processing device 250 acquires the second captured image data by instructing the projection apparatus 10, which is projecting the second pattern on the projection surface SC, to capture the image of the projection surface SC with the camera 120. Then, in step SA140, the processing device 250 displays the second captured image G2 and the second setting image G5 on the display device 210. When adjustment of parameters of the camera 120 is instructed by operation on the second setting image G5, the processing device 250 executes the processing in step SA130 and step SA140 again using the adjusted parameters.

In step SA150 following step SA140, the processing device 250 functions as the acquirer 250a. In step SA150, the processing device 250 instructs the projection apparatus 10 to stop the projection of the image light. In step SA160 following step SA150, the processing device 250 functions as the acquirer 250a and the display controller 250c. In the step SA160, the processing device 250 acquires the third captured image data by instructing the projection apparatus 10, which is stopping the projection of the image light, to capture the image of the projection surface SC with the camera 120. Then, in step SA160, the processing device 250 displays the third captured image G3 and the fourth setting image G6 on the display device 210. When adjustment of the parameters of the camera 120 is instructed by operation on the fourth setting image G6, the processing device 250 executes the processing in step SA150 and step SA160 again using the adjusted parameters.

In step SA170 executed following step SA160, the processing device 250 functions as the detector 250b. In step SA170, the processing device 250 detects a plurality of first feature points based on the first captured image data. In step SA170, the processing device 250 detects a plurality of second feature points based on the second captured image data. In step SA170, the processing device 250 detects a plurality of third feature points based on the third captured image data. When failing in detecting any of the first feature point, the second feature point, and the third feature point in step SA170, the processing device 250 may function as the display controller 250c and display, on the display device 210, a notification image for notifying the failure in the detection of the feature point to the user.

In step SA180 following step SA170, the processing device 250 functions as the setter 250d. In step SA180, the processing device 250 receives operation of the user performed on the input device 220 in order to select one of the first superimposition image G8, the second superimposition image G10, and the third superimposition image G12. The processing device 250 sets a coordinate in a first coordinate system of a corner of the projection surface SC based on the operation explained above in order to define a projection position on the projection surface SC of an image projected from the projector 110.

According to the present embodiment, the user can select a detection result considered to be most appropriate for a detection result of the corner of the projection surface SC based on each of the first captured image G1, the second captured image G2, and the third captured image G3. The detection of a corner of the projection surface SC based on each of the first captured image G1, the second captured image G2, and the third captured image G3 has advantages and disadvantages respectively. Since pattern that one algorithm is not good at can be complemented by another algorithm, the detection accuracy of a corner is increased, the robustness concerning maintenance of the position of a projection image with respect to the projection surface SC is improved, and variations of an actual environment that can be maintained increase. The projection apparatus 10 may be caused to store, for each pattern to be imaged, parameters (a zoom amount and exposure) of the camera 120 at the time when the pattern is imaged by the camera 120. Accordingly, once the user selects a corner detection method suitable for an actual environment, fine adjustment can be omitted in the second and subsequent maintenance.

### B. Modifications

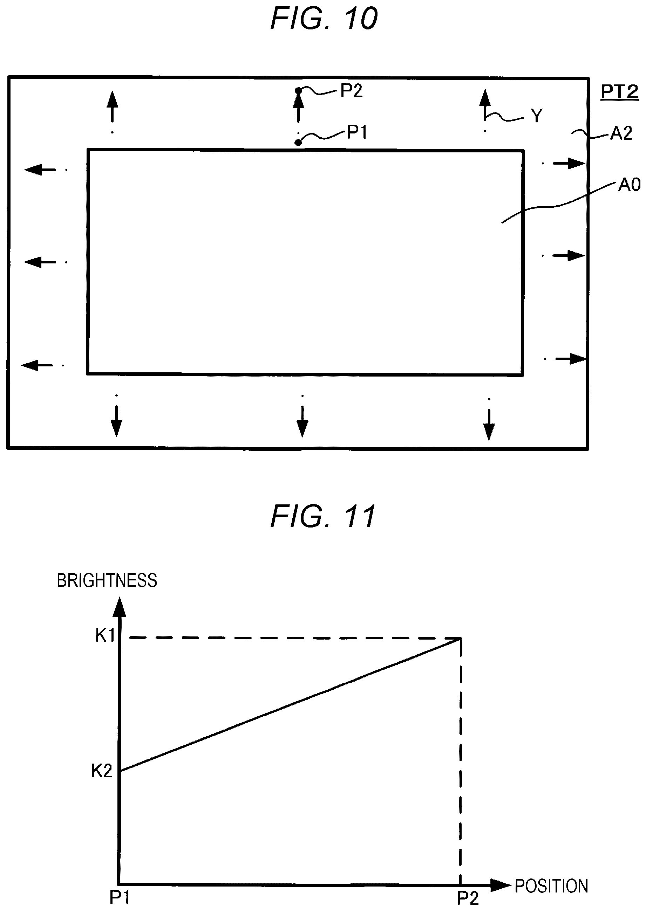

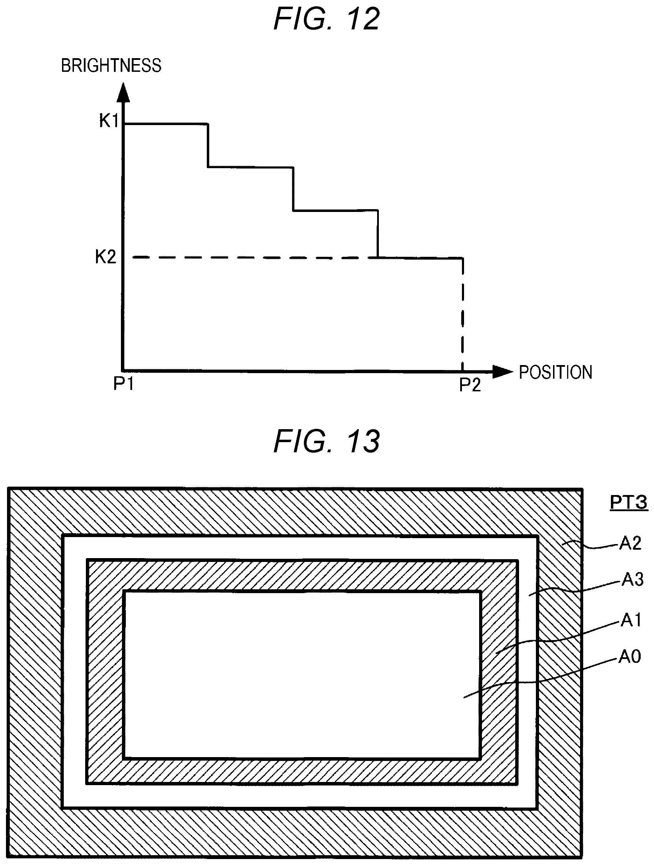

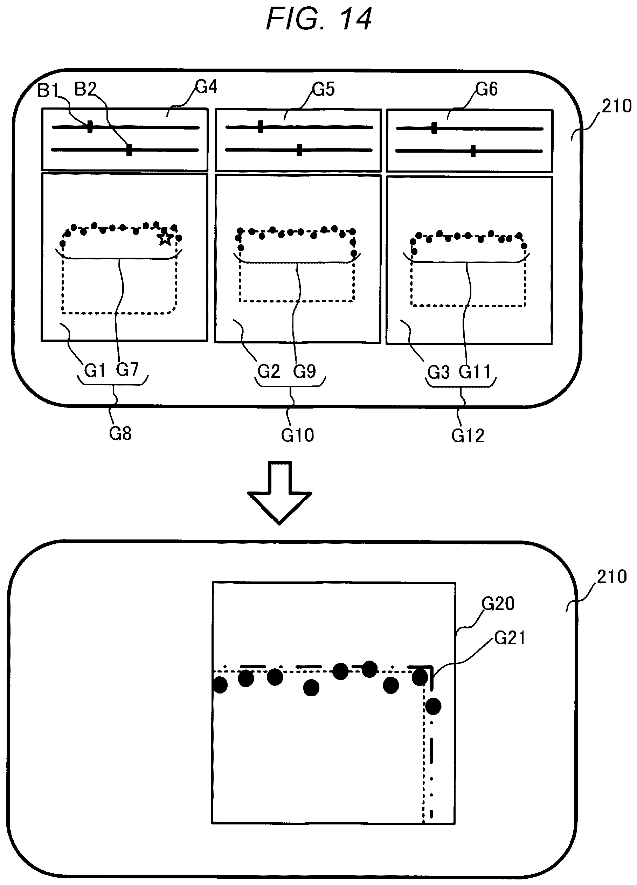

The embodiment explained above can be modified as explained below.
(1) As the second pattern, as illustrated in FIG. 10, a second pattern PT2 having a first portion A0 and an annular second portion A2 provided around the first portion A0 may be used. FIG. 11 is a graph representing a state in which the brightness from the position P1 to the position P2 in the first direction in the second portion A2 increases from K2 to K1. As illustrated in FIG. 11, in the second portion A2, the brightness continuously increases in the first direction, which is the direction from the center of the projection surface SC toward the outer side. In FIG. 10, a state in which the brightness continuously increases in the first direction from the center of the projection surface SC toward the outer side in the second portion A2 is indicated by an arrow Y2 drawn by an alternate long and short dash line. By causing the projection apparatus 10 to project the second pattern PT2 such that the projection surface SC fits in the first portion A0 in the second pattern in the present embodiment, it is possible to reduce the influence of the reflected light from another surface located in the vicinity of the corner of the projection surface SC as in the embodiment explained above.
(2) In the second portion A1 of the second pattern in the embodiment explained above, as illustrated in FIG. 4, the brightness continuously decreased in the first direction from the position P1 to the position P2. However, as illustrated in FIG. 12, an image having a second portion in which the brightness decreases stepwise from K1 to K2 in the first direction from the position P1 to the position P2 may be used as the second pattern PT1. By using the second pattern in which the brightness decreases stepwise from the center of the projection surface toward the outer side, the influence of secondary reflection from a surface other than the projection surface is prevented from reaching the corner of the projection surface SC and the vicinity thereof. Similarly, the second portion A2 in the modification (1) may also have a brightness changing portion in which the brightness increases stepwise in the first direction from the position P1 to the position P2.
(3) As illustrated in FIG. 13, a second pattern PT3 including the second portion A1 and the second portion A2 may be used and the second pattern PT3 may be projected to sandwich a corner of the projection surface SC in a region A3 between the second portion A1 and the second portion A2. According to this aspect as well, the influence of the secondary reflection from a surface (for example, a ceiling) other than the projection surface can be prevented from reaching the corner of the projection surface and the vicinity thereof. The size of the region A3 can also be adjusted according to a positional relationship between the projection surface SC and the surface other than the projection surface SC.
(4) The second pattern PT1 in the embodiment explained above is the entirely white image having the second portion A2 in the periphery but may be a single-color image of any one of R, G, and B having the second portion A2 in the periphery. By using the second pattern PT1 having a color (for example, a color in a complementary color relationship) corresponding to a color of a wall surface of a room in which the projection surface is installed, the influence of the secondary reflection from the surface other than the projection surface can be further suppressed from reaching the corner of the projection surface SC and the vicinity thereof. The same applies to the second pattern in the modification (1). When the single-color image of any one of R, G, and B having the second portion A2 in the periphery thereof is used as the second pattern PT1, the detector 250b may use a different differential filter depending on the color of the image.
(5) The distribution of the second portion A1 in the second pattern PT1 may be changed. The changing the distribution of the second portion A1 means changing a range (that is, the size) of the second portion A1 or changing a gradient of a change in brightness in the second portion A1. As the second portion A2 is larger and the gradient of the brightness change is gentler, a margin with which the position of a projection image with respect to the projection surface SC can be maintained is wider. On the other hand, when the gradient of the brightness change is steep, it is easy to find a corner of the projection surface SC. The projection surface SC onto which the second pattern PT1 is projected may be imaged using the camera 120 and the differential filter of the detector 250b may be changed according to at least one of a range and a gradient of distribution of the second portion A1 in a captured image. Similarly, the distribution of the second portion A2 may be changed for the second pattern in the modification (1).
(6) Any one of the detection of a corner based on the first captured image G1 and the detection of a corner based on the second captured image G2 may be omitted and the detection of a corner based on one of the first captured image G1 and the second captured image G2 and the detection of a corner based on the third captured image G3 may be executed. When the detection of a corner based on the first captured image G1 is omitted, the second captured image G2 corresponds to the first captured image in the present disclosure and the second pattern in the embodiment explained above corresponds to a "pattern projected from the projector onto the projection surface" in the present disclosure. When the detection of a corner based on the second captured image G2 is omitted, the first captured image G1 corresponds to the first captured image in the present disclosure and the first pattern in the embodiment explained above corresponds to the "pattern projected from the projector onto the projection surface" in the present disclosure. The detection of a corner based on the third captured image G3 may be omitted and the detection of a corner based on the first captured image G1 and the detection of a corner based on the second captured image G2 may be executed. According to the present embodiment, the user can select a detection result considered to be most appropriate for a detection result of the corner of the projection surface SC based on each of the first captured image G1, the second captured image G2, and the third captured image G3. When at least two of the detection of a corner based on each of the first captured image G1, the second captured image G2, and the third captured image G3 are executed, the detection accuracy of a corner is increased, the robustness concerning maintenance of the position of a projection image with respect to the projection surface SC is improved, and variations of an actual environment that can be maintained increase.
(7) As illustrated in FIG. 14, when one point in the vicinity of a first corner in the first superimposition image G8 is selected by selection operation of the user on the input device 220, the display controller 250c may display, on the display device 210, a first enlarged angle image G20 obtained by enlarging a predetermined range including the selected point in the first captured image G1 and a first enlarged position image G21 indicating the position of a first corner in the first enlarged angle image G20. An image including the first enlarged angle image G20 and the first enlarged position image G21 may be referred to as first enlarged superimposition image. The first enlarged superimposition image is another example of the first superimposition image in the present disclosure or another first superimposition image distinguished from the first superimposition image in the present disclosure. The first enlarged position image G21 is another example of the first position image. The selection operation of the user for the indication image is, for example, operation of selecting the vicinity of the first corner in the first superimposition image G8 with the input device 220. In FIG. 14, the point selected by the user are indicated by a star. The first enlarged position image G21 is an image indicating a contour line of a corner detected based on the first captured image G1. The contour line is indicated by an alternate long and short dash line and an alternate long and two short dashes line in FIG. 14. When the first corner is not included in a predetermined range including the selected point, the display controller 250c may display a notification image for notifying an error on the display device 210. Although illustration is omitted, the display controller 250c may display only a dot image indicating a point corresponding to the star, which is the point selected by the user, on the display device 210 as the first enlarged position image G21, may display only an image indicating only the contour line on the display device 210 as the first enlarged position image G21, or may display both of the dot image and the image indicating the contour on the display device 210 as the first enlarged position image G21. At this time, the display controller 250c may display only the dot image indicating the point corresponding to the star, which is the point selected by the user. Accordingly, since an image other than the dot image is not displayed, it is possible to prevent the user from less easily discriminating which point has been selected by the user. When the first enlarged superimposition image is another first superimposition image distinguished from the first superimposition image in the present disclosure, the first enlarged superimposition image may be displayed simultaneously with the first superimposition image.
(8) The first enlarged position image G21, that is, at least one of the dot image and the image indicating the contour line may be not only displayed on the display device 210 but also projected onto the projection surface SC from the projector 110. For example, the processing device 150 converts, based on the coordinate conversion data D, the position of the point selected by the user on the display device 210 into a position on the display panel of the projector 110 and performs control for projecting an image representing the converted position, that is, at least one of a dot image and an image indicating a contour line at or near a corner of the projection surface SC. Accordingly, since at least one of the dot image and the image illustrating the contour line is projected onto the actual projection surface SC, it is easy for the user to grasp whether a corner of the actual projection surface SC is firmly specified.
(9) Instead of the first superimposition image G8, the second superimposition image G10, and the third superimposition image G12 not being displayed on the display device 210, at least one of the dot image and the image indicating the contour line may be projected from the projector 110 onto the corner of the projection surface SC.
(10) The first superimposition image G8, the second superimposition image G10, and the third superimposition image G12 may be sequentially displayed one by one on the display device 210 instead of being not simultaneously displayed on the display device 210.
(11) At least one of the first indication image G7, the second indication image G9, and the third indication image G11 may be an image indicating a side of the projection surface SC or may be a character or a graphic icon indicating the position of the corner or the side of the projection surface SC. That is, if the user can recognize a feature portion (the first feature portion or the like) as a mark on the projection surface SC, all of the first indication image G7, the second indication image G9, and the third indication image G11 are not limited to images directly indicating the corner of the projection surface SC and may be a form indirectly indicating the corner of the projection surface SC or a form indicating the side of the projection surface SC and the design the images is not particularly limited either. For example, at least one of the first indication image G7, the second indication image G9, or the third indication image G11 may be an intersection of two straight lines corresponding to two sides of the projection surface SC intersecting each other, that is, two straight lines along the two sides. In this case, the intersection may indicate the corner. The two sides may have different colors. The side of the projection surface SC may be a boundary between the projection surface SC and a region other than the projection surface SC.
(12) The acquirer 250a, the detector 250b, the display controller 250c, and the setter 250d in the embodiment explained above are the software modules. However, at least one of the acquirer 250a, the detector 250b, the display controller 250c, and the setter 250d may be a hardware module such as an application specific integrated circuit (ASIC). Even if at least one of the acquirer 250a, the detector 250b, the display controller 250c, and the setter 250d is the hardware module, the same effects as those of the embodiment explained above are achieved.
(13) Another example of the computer in the present disclosure may be the processing device 250. The processing device 150 may execute some of the steps of the flowchart illustrated in FIG. 9 and the processing device 250 may execute the other steps.
(14) The program PR2 may be manufactured alone and may be provided for a fee or free of charge. Specific aspects at the time when providing the program PR2 include an aspect in which the program PR2 is provided by being written in a computer-readable recording medium such as a flash ROM and an aspect in which the program PR2 is provided by being downloaded through an electric communication line such as the Internet.

### C. Summary of the present disclosure

The present disclosure is not limited to the embodiment and the modifications explained above and can be implemented in various aspects without departing from the gist of the present disclosure. For example, the present disclosure can also be implemented by the following aspects. The technical characteristics in the embodiment explained above corresponding to technical characteristics in the aspects described below can be replaced or combined as appropriate in order to solve a part or all of the problems of the present disclosure or in order to achieve a part or all of the effects of the present disclosure. The technical characteristics can be deleted as appropriate unless explained as essential technical characteristics in the present specification.

A summary of the present disclosure is appended below.

### Appendix 1

According to a first aspect of the present disclosure, there is provided a display method including:
displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image; and
displaying, with the display device, a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image. According to this aspect, by referring to the first superimposition image and the second superimposition image, a user can easily determine which pattern is preferable for detecting an edge of the projection surface.

### Appendix 2

According to a second aspect of the present disclosure, there is provided a display method including:
displaying, with a display device, a first superimposition image in which a first indication image is superimposed on a first image, the first image being an image based on a first capture image acquired by a camera imaging a pattern projected from a projector onto a projection surface and the projection surface, the first indication image indicating a first feature portion serving as a mark on the projection surface extracted based on the first image; and displaying, with the display device, a second superimposition image in which a second indication image is superimposed on a second image, the second image being an image based on a second captured image acquired by the camera imaging the projection surface irradiated with external light from a light source different from the projector, the second indication image indicating a second feature portion serving as a mark on the projection surface extracted based on the second image.

### Appendix 3

A display method according to a more preferable aspect is the display method described in Appendix 1 or Appendix 2, wherein the first indication image is a first position image indicating a position of a first corner of the projection surface in the first image serving as the first feature portion. According to this aspect, by checking the first position image, the user can easily grasp that the first corner of the projection surface has been successfully detected by the first pattern and can grasp that the corner of the projection surface can be detected by at least the first pattern.

### Appendix 4

A display method according to still another preferable aspect is the display method described in Appendix 3, further comprising: including setting a coordinate of the first corner in a first coordinate system based on a correspondence relationship in which a first coordinate in the first coordinate system is associated with a second coordinate in a second coordinate system, the first coordinate system defining a position on the projection surface on a drawing panel of the projector for each of a plurality of adjustment points for adjusting a shape of an image projected from the projector, the plurality of adjustment points being projected from the projector onto the projection surface, the second coordinate system defining a position on an image captured by the camera. According to this aspect, since the second coordinate of each of the plurality of adjustment points can be set as the coordinate of the first corner in the first captured image, it is possible to omit a process in which the user manually selects the first corner out of the first superimposition image, and the usability for the user is improved.

### Appendix 5

A display method according to still another preferred aspect is the display method described in Appendix 3, wherein the first superimposition image is an image obtained by superimposing a first enlarged angle image obtained by enlarging the first corner in the first image and a first enlarged position image indicating a position of a corner in the first enlarged angle image serving as the first position image. According to this aspect, the visibility of the first corner is improved.

### Appendix 6

A display method according to another preferred aspect is the display method described in Appendix 1 or Appendix 2, wherein the first indication image is a first position image indicating a position of a first corner of the projection surface in the first image serving as the first feature portion, the second indication image is a second position image indicating a position of a second corner of the projection surface in the second image serving as the second feature portion, the second corner corresponds to the first corner, and the display method further includes displaying, with the display device, the first superimposition image including the first position image side by side with the second superimposition image including the second position image. According to this aspect, since the first superimposition image and the second superimposition image are displayed side by side, an extraction result of the first corner by the first pattern and an extraction result of the second corner by the second pattern are easily compared.

### Appendix 7

A display method according to still another preferred aspect is the display method described in any one of Appendix 1, Appendix 2, Appendix 3, Appendix 4, Appendix 5, and Appendix 6, further including: displaying, with the display device, a first setting image for setting a first range in which an arithmetic operation of extracting the first feature portion in the first image is performed; and displaying, with the display device, a second setting image for setting a second range in which an arithmetic operation of extracting the second feature portion in the second image is performed. According to this aspect, the first range and the second range can be optionally set by the user, and a feature portion can be extracted in a range desired by the user.

### Appendix 8

A display method according to still another preferred aspect is the display method described in any one of Appendix 1, Appendix 2, Appendix 3, Appendix 4, Appendix 5, and Appendix 6, further including: displaying, with the display device, a first setting image for setting a first range in which an arithmetic operation of extracting the first feature portion in the first image is performed; and displaying, with the display device, a third setting image for setting whether a second range in which an arithmetic operation of extracting the second feature portion in the second image is performed is set to a same range as the first range, wherein, when an instruction to set the second range to the same range as the first range is received from a user via the third setting image, the second range is set to the same range as the first range. According to this aspect, since the user can also set the second range only by setting the first range, usability for the user is improved.

### Appendix 9

A display method according to still another preferred aspect is the display method described in any one of Appendix 1, Appendix 2, Appendix 3, Appendix 4, Appendix 5, Appendix 6, Appendix 7, and Appendix 8, further including, when the extraction of the first feature portion based on the first image has been unsuccessful, displaying, with the display device, a first notification image notifying that the extraction of the first feature portion has been unsuccessful. According to this aspect, the user can easily grasp that the user has failed in the detection of the first feature portion.

### Appendix 10

A display method according to still another preferred aspect is the display method described in any one of Appendix 1, Appendix 2, Appendix 3, Appendix 4, Appendix 5, Appendix 6, Appendix 7, Appendix 8, and Appendix 9, wherein the first indication image is a first position image indicating a position of a first corner of the projection surface in the first image serving as the first feature portion, the second indication image is a second position image indicating a position of a second corner of the projection surface in the second image serving as the second feature portion, the second corner corresponds to the first corner, and the display method further includes: receiving operation of selecting one of the first superimposition image including the first position image and the second superimposition image including the second position image from a user; and setting, based on the operation, a corner of the projection surface defining a projection position on the projection surface of an image projected from the projector. According to this aspect, the user can set a corner preferable for the user.

### Appendix 11

According to an aspect of the present disclosure there is provided a program causing a computer, which controls a display device, to display, with the display device, a first superimposition image in which a first indication image is superimposed on a first image, the first image being an image based on a first capture image acquired by camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.
According to this aspect as well, by referring to the first superimposition image and the second superimposition image, a user can easily determine which pattern is preferable for detecting an edge of the projection surface.

### Appendix 12

According to another aspect of the present disclosure there is provided a program causing a computer, which controls a display device, to display, with the display device, a first superimposition image in which a first indication image is superimposed on a first image, the first image being an image based on a first capture image acquired by a camera imaging a pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second captured image acquired by the camera imaging the projection surface irradiated with external light from a light source different from the projector, the second indication image indicating a second feature portion serving as a mark on the projection surface extracted based on the second image. According to this aspect as well, by referring to the first superimposition image and the second superimposition image, a user can easily determine which pattern is preferable for detecting an edge of the projection surface.

### Appendix 13

According to an aspect of the present disclosure, there is provided an information processing apparatus including a processing device, the processing device displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image. According to this aspect as well, by referring to the first superimposition image and the second superimposition image, a user can easily determine which pattern is preferable for detecting an edge of the projection surface.

### Appendix 14

According to another aspect of the present disclosure, there is provided an information processing apparatus including a processing device, the processing device displaying, with a display device, a first superimposition image in which a first indication image is superimposed on a first image , the first image being an image based on a first capture image acquired by a camera imaging a pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second captured image acquired by the camera imaging the projection surface irradiated with external light from a light source different from the projector, the second indication image indicating a second feature portion serving as a mark on the projection surface extracted based on the second image. According to this aspect as well, by referring to the first superimposition image and the second superimposition image, a user can easily determine which pattern is preferable for detecting an edge of the projection surface.

The first image is not necessarily limited to the first captured image G1. The first image may instead be an illustration or a line drawing, which is an image that represents the first captured image G1. For example, the illustration or the line drawing is a diagram that visually simplifies and represents the first captured image G1. The illustration and the line drawing may be created by the processing device 250.Specifically, the illustration and the line drawing may be generated based on the first captured image G1 using an image generation tool such as generative AI. The illustration and the line drawing may also be a pre-prepared image. The first image used for superimposition with the indication image may be one of the first captured image G1, the illustration, or the line drawing, and the indication image may be extracted based on another of these.
The second image is not necessarily limited to the second captured image G2. The second image may instead be an illustration or a line drawing, which is an image that represents the second captured image G2. For example, the illustration or the line drawing is a diagram that visually simplifies and represents the second captured image G2. The illustration and the line drawing may be created by the processing device 250. Specifically, the illustration and the line drawing may be generated based on the second captured image G2 using an image generation tool such as generative AI. The illustration and the line drawing may also be a pre-prepared image. The second image used for superimposition with the indication image may be one of the second captured image G2,the illustration, or the line drawing, and the indication image may be extracted based on another of these.

Note that, step(s) or operation(s) other than those necessary to solve the at least one of problems in the present application may be omitted from each flowchart. For example, step SA160 may be omitted from the flowchart illustrated in FIG. 9.

Note that, the sequence of steps or operations within each flowchart may be changed, as long as at least one of the problems in the present application can be solved or technical consistency is maintained. For example, the sequence of step SA130 and step SA140 may be changed relative to the sequence of step SA150 and step SA160 within the flowchart illustrated in FIG. 9.

## Claims

1. A display method comprising:
displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image; and
displaying, with the display device, a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.

2. The display method according to claim 1, wherein the first indication image is a first position image indicating a position of a first corner of the projection surface in the first image serving as the first feature portion.

3. The display method according to claim 2, further comprising: setting a coordinate of the first corner in a first coordinate system based on a correspondence relationship in which a first coordinate in the first coordinate system is associated with a second coordinate in a second coordinate system, the first coordinate system defining a position on the projection surface on a drawing panel of the projector for each of a plurality of adjustment points for adjusting a shape of an image projected from the projector, the plurality of adjustment points being projected from the projector onto the projection surface, the second coordinate system defining a position on an image captured by the camera.

4. The display method according to claim 2 or claim 3, wherein the first superimposition image is an image obtained by superimposing a first enlarged angle image obtained by enlarging the first corner in the first image and a first enlarged position image indicating a position of a corner in the first enlarged angle image serving as the first position image.

5. The display method according to claim 1, wherein
the first indication image is a first position image indicating a position of a first corner of the projection surface in the first image serving as the first feature portion,
the second indication image is a second position image indicating a position of a second corner of the projection surface in the second image serving as the second feature portion,
the second corner corresponds to the first corner, and
the display method further comprises displaying, with the display device, the first superimposition image including the first position image side by side with the second superimposition image including the second position image.

6. The display method according to any one of claims 1 to 5, further comprising:
displaying, with the display device, a first setting image for setting a first range in which an arithmetic operation of extracting the first feature portion in the first image is performed; and
displaying, with the display device, a second setting image for setting a second range in which an arithmetic operation of extracting the second feature portion in the second image is performed.

7. The display method according to any one of claims 1 to 6, further comprising:
displaying, with the display device, a first setting image for setting a first range in which an arithmetic operation of extracting the first feature portion in the first image is performed; and
displaying, with the display device, a third setting image for setting whether a second range in which an arithmetic operation of extracting the second feature portion in the second image is performed is set to a same range as the first range, wherein
when an instruction to set the second range to the same range as the first range is received from a user via the third setting image, the second range is set to the same range as the first range.

8. The display method according to any one of claims 1 to 7, further comprising, when the extraction of the first feature portion based on the first image has been unsuccessful, displaying, with the display device, a first notification image notifying that the extraction of the first feature portion has been unsuccessful.

9. The display method according to any one of claims 1 to 8, wherein the first indication image is a first position image indicating a position of a first corner of the projection surface in the first image as the first feature portion, the second indication image is a second position image indicating a position of a second corner of the projection surface in the second image as the second feature portion, the second corner corresponds to the first corner, and the display method includes receiving, from the user, an operation of selecting one of the first superimposition image including the first position image and the second superimposition image including the second position image, and setting, based on the operation, a corner of the projection surface defining a projection position of an image projected from the projector onto the projection surface.

10. A program causing a computer, which controls a display device, to display, with the display device, a first superimposition image in which a first indication image is superimposed on a first image, the first image being an image based on a first capture image acquired by camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.

11. An information processing apparatus comprising a processing device, the processing device displaying, with a display device, a first superimposition image in which a first indication image is superimposed on a first image, the first image being an image based on a first capture image acquired by a camera imaging a first pattern projected from a projector onto a projection surface and the projection surface, the first indication image indicating a first feature portion serving as a mark on the projection surface extracted based on the first image and a second superimposition image in which a second indication image is superimposed on a second image, the second image being an image based on a second capture image acquired by the camera imaging a second pattern different from the first pattern projected from the projector onto the projection surface and the projection surface, the second indication image indicating a second feature portion serving as a mark on the projection surface extracted based on the second image.
